# EUROPÄISCHE PATENTSCHRIFT

(11) **EP 0 604 836 B1**
(45) Veröffentlichungstag und Bekanntmachung des Hinweises auf die Patenterteilung: **27.10.1999**
(21) Anmeldenummer: 93120238.6
(22) Anmeldetag: 16.12.1993
(51) Int. Cl.: C21D 1/09, C23C 8/66

(54) **Verfahren zur Erzeugung von verschleissbeständigen Randschichten auf Stahlbauteilen sowie Stahlbauteile mit verschleissbeständigen Randschichten**
Method for making wear-resistant surface coatings on steel pieces and steel pieces with such coatings
Procédé pour la production de couches superficielles résistant à l'usure sur des pièces en acier et pièces en acier avec ces couches

(30) Priorität: 28.12.1992 DE 4244296
(43) Veröffentlichungstag der Anmeldung: 06.07.1994
(73) Patentinhaber: ADAM OPEL AG, 65423 Rüsselsheim (DE); General Motors Espana, S.A., Figueruelas (Zaragoza) (ES)
(72) Erfinder: Barton, Georg M., Dr.-Ing. grad., D-65428 Rüsselsheim (DE); Richter, Klaus E., Dipl.-Ing., D-64569 Nauheim (DE)
(74) Vertreter: Morgan, James Garnet

(56) Entgegenhaltungen:
- DD-A- 292 158
- DE-A- 3 506 302
- DE-A- 3 916 684
- DE-A- 3 929 179
- DE-B- 2 501 370
- DE-C- 46 200
- DE-C- 3 840 905
- WERKSTATT UND BETRIEB, Bd.123, Nr.11, November 1990, MUNCHEN DE Seiten 875 - 877 R. HOFMANN ET AL. 'Absorptionsmittel ....'
- PATENT ABSTRACTS OF JAPAN vol. 3, no. 87 (C-53) (107) 25. Juli 1979 & JP-A-54 065 107 (HITACHI SEISAKUSHO) 25. Februar 1979

## Beschreibung

Die vorliegende Erfindung betrifft ein Verfahren zur Erzeugung einer verschleißbeständigen Randschicht auf einem un-bzw. niedriglegierten Stahl durch die Einbringung von zusätzlichen Kohlenstoff in die Randschicht unter der Einwirkung von Wärme sowie Stahlbauteile, welche mit verschleißbeständigen Randschichten versehen sind.

Ein Verfahren der eingangs genannten Art ist seit vielen Jahren in der Metallurgie etabliert in Form des sog. Einsatzhärtens. Bei diesem Verfahren werden die Stahlbauteile aus un- bzw. niedriglegierten Stählen mit etwa 0,15 % Kohlenstoffanteile zusammen mit einem Kohlenstoffträger für mehrere Stunden bei einer Temperatur von etwa 925°C behandelt und durch Diffusion des Kohlenstoffs entsteht eine Randschicht mit einer Dicke von etwa 0,1 bis 0,2 mm mit einem Kohlenstoffanteil von etwa 0,9 %. Dieser erhöhte Kohlenstoffanteil ermöglicht dann die Erzeugung einer harten Oberfläche.

Obwohl solche einsatzgehärtete Stähle für manche Zwecke ausreichend sind, ist das Verfahren durch die langen Behandlungszeiten, durch die eintretenden Verformungen und häufig auch aufgrund der relativ dünnen harten Schicht für viele Anwendungen zumindest nach den heutigen Maßstäben nicht geeignet. Beispielsweise sind einsatz- oder induktivgehärtete Stähle bei den heutigen Anforderungen für die Verwendung bei Schlepp- bzw. Kipphebeln in modernen Verbrennungsmotoren wegen zu geringer Beständigkeit gegenüber adhäsiven Verschleiß ungeeignet.

Es sind auch andere Herstellungsverfahren bekannt zur Herstellung von verschleißbeständigen Schichten, welche durch Umschmelzen der Oberfläche des jeweiligen Bauteils erzeugt werden.

Beispielsweise sind Verfahren bekannt, wonach Schalenhartguß (chilled cast iron) bzw. WIG (TIG) umgeschmolzener Grauguß für Nockenwellen und Schlepphebel verwendet wird, weil solche Bauteile eine sehr gute Beständigkeit besonders gegenüber adhäsiven Verschleiß aufweisen. Gemeinsam für die genannten Herstellungsverfahren ist, daß die Randschicht ein ledeburitisches Gefüge aufweist, das ohne weitere Legierungselemente für die gute Verschleißbeständigkeit verantwortlich ist. Neben dem WIG-Verfahren zur Herstellung von Ledeburit auf Grauguß-Nockenwellen kann auch das Elektronen- bzw. Laserumschmelzverfahren angewendet werden. In diesem Zusammenhang wird auf die DE-OS 39 16 684 hingewiesen. Bekannt sind auch Veröffentlichungen, wonach zwecks Verbesserung der Verschleißbeständigkeit hochlegierte Werkzeugstähle, z.B. X210Cr13, wie auch Schnellarbeitsstähle mittels Laser umgeschmolzen worden sind. Das Gefüge dieser Stahlarten ist zwangsläufig nach dem Umschmelzen ledeburitisch.

Wird ein un- bzw. niedriglegierter Konstruktionsstahl randschichtumgeschmolzen, so erhält man, je nach Abschreckraten, ein ferritisch-perlitisches bzw. ein leichtmartensitisches Gefüge, das gegenüber abrasiven und adhäsiven Verschleiß sehr unbeständig ist, wodurch diese Stahlgruppe im umgeschmolzenen Zustand nicht zum Einsatz kommen kann.

Die Aufgabe der vorliegenden Erfindung liegt darin, ein Verfahren zur Behandlung von un- bzw. niedriglegierten Stahlbauteilen bzw. behandelte Stahlbauteile vorzusehen, welche es ermöglichen, preisgünstige Stahlbauteile in einer insbesondere gegenüber adhäsivem Verschleiß beständigen Form vorzusehen, wobei sich die entsprechende Behandlung mit relativ geringem Aufwand preisgünstig und schnell sowie in einer industriellen Serienfertigung durchführen läßt. Insbesondere soll ein Verfahren vorgesehen werden, das es ermöglicht, un-bzw. niedriglegierten Stahlbauteile im Ventiltrieb von Brennkraftmaschinen einzusetzen.

Zur Lösung dieser Aufgabe wird verfahrensmäßig erfindungsgemäß vorgesehen, daß ein kohlenstoffhaltiges Material auf die Oberfläche des Stahles mindestens im Bereich der erwünschten Randschicht aufgebracht wird und durch ein Umschmelzen der Randschicht der Kohlenstoff zur Ausbildung eines ledeburitischen Randschichtgefüges in der Randschicht aufgelöst und eine ledeburitische Randschicht mit einer Dicke von etwa 0,7 mm ausgebildet wird. Die entsprechenden Bauteile zeichnen sich daher dadurch aus, daß die Randschicht eine ledeburitische Randschicht von entsprechender Dicke ist.

Mit der Erfindung wird somit zum ersten Mal ein Verfahren bzw. ein un- bzw. niedriglegiertes Stahlbauteil vorgesehen, welches mittels Randschichtumschmelzen mit einer ledeburitischen Randschicht versehen ist.

Hierdurch gelingt es beispielsweise eine aus Stahlrohr rundgeknetete Nockenwelle, sowie geschmiedete oder kaltfließgepreßte Schlepp- oder Schwinghebel zu erzeugen, die kostengünstig hergestellt werden können, dennoch aber ausgezeichnete verschleißbeständige Eigenschaften aufweisen.

Mit anderen Worten, es können durch die Erfindung monolithische, aus weichem, kostengünstigem Stahl geschmiedete, hohle und sehr leichte Bauteile, z.B. Nockenwellen mit sehr guter Verschleißbeständigkeit hergestellt werden. Die dadurch mögliche Leichtbauweise trägt zur Kraftstoffeinsparung und schließlich auch zum Umweltschutz bei. Durch die hohe Verschleißbeständigkeit und die gegenüber schalenhartem Guß bzw. WIG-Randschichten hohe Qualität werden die Standzeiten, d.h. die Lebensdauer der Bauteile erhöht und die Ausfallraten können gesenkt werden.

Auch gegenüber anderen preisgünstigen Nockenwellenkonstruktionen, wie beispielsweise Zusammenbaunockenwellen, haben Nockenwellen, die nach der vorliegenden Erfindung erzeugt werden, Vorteile. Die Zusammenbaunockenwellen sind einerseits schwerer als die mit der vorliegenden Erfindung herstellbaren und gekneteten Nockenwellen und weisen andererseits in einer Großserie Probleme auf, da sowohl die Betriebsbeständigkeit (lockern der Nocken auf dem Rohrschaft) als auch der Preis den Erwartungen nicht entspricht.

Bei der vorliegenden Erfindung sind die Herstellungskosten im Vergleich zu einer Zusammenbaunockenwelle geringer, wobei die Betriebssicherheit auch größer ist.

Es soll an dieser Stelle betont werden, daß das erfindungsgemäße Verfahren bzw. nach diesem Verfahren hergestellte Bauteile sich deutlich von bekannten Verfahren zur Herstellung verschleißbeständiger Schichten durch Randschichtumschmelzen unterscheiden. Die bisher bekannten Verfahren zielen beispielsweise auf das Einlegieren von metallischen Legierungselementen, oder das Einbringen in die Randschichtschmelze von nicht bzw. nur geringfügig auflösenden Partikeln, z.B. Diamantpulver, Keramikpulver, Karbiden und intermetallischen Phasen, oder auf das Aufbringen von Verschleißschutzschichten aus Substraten durch Anschmelzen (Aufpanzern, "Laser Clading" und ähnliches), oder Durchführen des Umschmelzverfahrens in einer Stickstofratmosphäre zwecks Erzeugung von Nitriden im Umschmelzgut, wie z.B. an Titan-Legierungen praktiziert. Auch sind solche Verfahren bekannt, bei denen zwar kein Umschmelzen stattfindet, dennoch ein Transformationshärten erreicht wird. Es handelt sich hier aber um ein Verfahren, das zu einer martensitischen Struktur führt. Dagegen wird mit der Erfindung die vollständige Auflösung von zusätzlichem Kohlenstoff lediglich in den Randschichten eines un- bzw. niedriglegierten Stahlbauteils mit maximal 0,45 Gew.-% Kohlenstoff angestrebt.

An dieser Stelle soll kurz auf die DE-C-46200 aus dem Jahr 1888 hingewiesen werden, welche sich mit einem Randschichtumschmelzverfahren befaßt, bei dem durch das Aufbringen von Kohle bzw. Kohlenstoff auf die Oberfläche von Eisen, dieses in Stahl umgewandelt wird. Stahl ist naturgemäß härter als Eisen, was die in der Schrift erwähnten gehärteten Oberflächen enthält. Die Schrift befaßt sich jedoch nicht mit dem Randschichtumschmelzen von Stahl, um eine ledeburitische Randschicht zu erzeugen.

Der Aufsatz in "Werkstatt und Betrieb", Bd. 123, Nr. 11, 1990, S. 875 bis 877" befaßt sich mit der Erhöhung des Absorptionsvermögens von Eisenwerkstoffen bei der Durchführung von Randschichthärten mittels Laserstrahlen. Es handelt sich jedoch hier um sogenanntes Transformationshärten, bei dem eine Schmelzung der Oberfläche, d.h. Randschichtumschmelzung nicht erwünscht ist. Zwar wird angedeutet, daß eine dünne ledeburitische Schicht von 30 µm Dicke sich ausbilden kann. Man ist aber bestrebt, keine ledeburitische Schicht, sondern ein martensitisches Gefüge zu erreichen.

Das erfindungsgemäße Verfahren wird vorzugsweise an einem St52-Stahlbauteil durchgeführt.

Der Kohlenstoff kann in Pulverform, beispielsweise in Graphitform auf die Oberfläche des Stahles aufgebracht werden und wird vorzugsweise nur in einer solchen Menge eingesetzt, um durch vollständiges Auflösen in der Randschicht das ledeburitische Gefüge zu erzeugen ohne dabei nennenswerte Rückstände auf der Oberfläche zu hinterlassen. Auf diese Weise wird nicht nur ein sparsamer Gebrauch des eingesetzten Kohlenstoffträgers sichergestellt, sondern die Dosierung des hinzuzufügenden Kohlenstoffanteils geht mit großer Genauigkeit vonstatten und es ist auch sehr günstig, daß nach dem Verfahren keine Pulverreste zu entfernen bzw. zu entsorgen sind.

Das Aufbringen kann durch Aufspritzen erfolgen, was besonders dann von Vorteil ist, wenn die Wärmequelle die Oberfläche mittels eines Strichstrahles bzw. eines Rasterverfahrens abtastet und aufwärmt, so, wie an sich üblich bei Laserstrahl- bzw. Elektronenstrahlbehandlungen. Das Aufsprühen des Kohlenstoffs kann dann zeitgleich mit dem Aufwärmen lokal erfolgen, wodurch ebenfalls eine sehr genaue Dosierung und saubere Handhabung möglich ist. Eine weitere Möglichkeit bestünde aber auch darin, den Kohlenstoffträger in Form einer dünnen Paste oder als Lack auf die zu behandelnde Oberfläche aufzubringen, wobei dies auch zeitgleich mit der Behandlung oder zuvor erfolgen könnte.

Besonders günstig ist es, wenn beim Durchführen des Verfahrens zusätzlich ein kohlenstoffhaltiges, gasförmiges Aufkohlungsmittel, vorzugsweise CH₄, C₂H₂ bzw. CO/CO₂ als Schutzgas während des Umschmelzens verwendet wird.

Hierdurch wird einerseits sichergestellt, daß Oxidationsvorgänge oder andere unerwünschte chemische Reaktionen weitestgehend vermieden werden, wobei etwa vorhandener Sauerstoff im Bereich des behandelten Gegenstandes leicht durch das chemische Schutzgas verdrängt bzw. gebunden wird.

Das Umschmelzen selbst kann mittels eines Laserstrahls, eines Elektronenstrahls oder einer Lichtbogenlampe bzw. durch WIG-Umschmelzen durchgeführt werden. Diese Umschmelzmöglichkeiten sind für sich bekannt und werden daher hier nicht weiter im Detail erörtert.

Die Möglichkeit besteht auch zur Vor- oder Nachwärmung des Bauteils bzw. zur Unterstützung des Umschmelzprozesses eine induktive Heizvorrichtung einzusetzen.

Wichtig ist, die Verweilzeit der Wärmequelle an der zu behandelnden Oberfläche entsprechend der Kornfeinheit des Kohlenstoffpulvers, dem Grad der Überhitzung über die Schmelztemperatur hinaus sowie dem Grad der Verwirbelung der Schmelze so zu wählen, daß die erwünschte ledeburitische Gefügestruktur bei zumindest im wesentlich vollständigen Auflösen des Kohlenstoffs erreicht wird. Bei einem praktischen Beispiel zur Erzeugung einer ledeburitischen Randschichtdicke von etwa 0,7 mm auf einem St52-Stahlsubstrat mit einer Dicke im Bereich von etwa 5 mm wird eine Verweilzeit im Bereich von etwa 0,1 bis 10 s benötigt, wobei diese Verweilzeit vorzugsweise etwa 3 s beträgt. Das Verfahren wird so durchgeführt, daß das ledeburitische Randschichtgefüge durch Abschrecken während des Erstarrens entsteht, wobei das Abschrecken entweder durch Selbstabschreckung des Gegenstandes und/oder durch extern forcierte Abkühlung erreicht wird. Das erzeugte ledeburitische Gefüge ist vorzugsweise leicht unter- bzw. übereutektisch.

Das Verfahren wird im übrigen so durchgeführt, daß der Übergang von der ledeburitischen Randschicht eine eindeutige Gefügegrenze aufweist, ohne daß im Substratbereich eine bedeutende Kohlenstoffdiffusionszone entsteht.

Das Verfahren ist nicht nur auf Nockenwellen anzuwenden, sondern ganz allgemein auf die verschiedensten Bauteile, beispielsweise auf solche mit planen oder sphärischen Flächen oder auf zylindrischen Zapfen, oder auf Bauteilen, die aus Blech, Stangen bzw. Bandeisen bestehen und/oder durch Schmieden, Strangpressen, Kaltfließpressen oder Walzen hergestellt werden.

Die nach der Erfindung hergestellten Bauteile sind noch detaillierter in den Ansprüchen 16 bis 18 spezifiziert.

## Patentansprüche

1. Verfahren zur Erzeugung einer verschleißbeständigen Randschicht auf einem un- bzw. niedriglegierten Stahl durch die Einbringung von zusätzlichem Kohlenstoff in die Randschicht unter der Einwirkung von Wärme, wobei
ein kohlenstoffhaltiges Material auf die Oberfläche des Stahles mindestens in Bereich der erwünschten Randschicht aufgebracht wird und durch ein Umschmelzen der Randschicht der Kohlenstoff zur Ausbildung eines ledeburitischen Randschichtgefüges in der Randschicht aufgelöst und eine ledeburitische Randschicht mit einer Dicke von etwa 0,7 mm ausgebildet wird.

2. Verfahren nach dem Anspruch 1,
dadurch **gekennzeichnet**,
daß der un- bzw. niedriglegierte Stahl maximal 0,45 Gew.-% Kohlenstoff enthält.

3. Verfahren nach dem Anspruch 1 oder Anspruch 2,
dadurch **gekennzeichnet,**
daß der Stahl ein St52-Stahl ist.

4. Verfahren nach einem der vorhergehenden Ansprüche,
dadurch **gekennzeichnet,**
daß der Kohlenstoff in Pulverform. beispielsweise in Graphitform, auf die Oberfläche des Stahles aufgebracht wird und vorzugsweise nur in einer solchen Menge, um durch vollständiges Auflösen in der Randschicht das ledeburitische Gefüge zu erzeugen, ohne nennenswerte Rückstände auf der Oberfläche zu hinterlassen.

5. Verfahren nach dem Anspruch 4,
dadurch **gekennzeichnet,**
daß der Kohlenstoff auf die Oberfläche des Stahles aufgesprüht wird.

6. Verfahren nach einem der vorhergehenden Ansprüche,
dadurch **gekennzeichnet,**
daß zusätzlich ein kohlenstoffhaltiges gasförmiges Aufkohlungsmittel vorzugsweise CH₄, C₂H₂ bzw. CO/CO₂ als Schutzgas während des Umschmelzens verwendet wird.

7. Verfahren nach einem der vorhergehenden Ansprüche,
dadurch **gekennzeichnet,**
daß das Umschmelzen mittels eines Laserstrahls, eines Elektronenstrahls oder einer Lichtbogenlampe bzw. durch WIG-Umschmelzen durchgeführt wird.

8. Verfahren nach einem der vorhergehenden Ansprüche,
dadurch **gekennzeichnet,**
daß zur Vor- oder Nachwärmung des Bauteils bzw. zur Unterstützung des Umschmelzprozesses eine induktive Wärmevorrichtung eingesetzt wird.

9. Verfahren nach einem der vorhergehenden Ansprüche,
dadurch **gekennzeichnet,**
daß die Verweilzeit der Wärmequelle an der zu behandelnden Oberfläche entsprechend der Kornfeinheit des Kohlenstoffpulvers, dem Grad der Überhitzung über die Schmelztemperatur hinaus sowie dem Grad der Verwirbelung der Schmelze gewählt wird.

10. Verfahren nach einem der vorhergehenden Ansprüche,
dadurch **gekennzeichnet,**
daß zur Erzeugung einer ledeburitischen Randschichtdicke von etwa 0,7 mm auf einem St52-Stahlsubstrat mit einer Dicke im Bereich von etwa 5 mm die Verweilzeit im Bereich zumindest 0,1 bis 10 s liegt und vorzugsweise etwa 3 s beträgt.

11. Verfahren nach einem der vorhergehenden Ansprüche,
dadurch **gekennzeichnet,**
daß es so durchgeführt wird, daß das ledeburitische Randschichtgefüge durch Abschrecken während des Erstarrens entsteht, wobei das Abschrecken entweder durch Selbstabschreckung des Gegenstandes und/oder durch externe forcierte Abkühlung erreicht wird.

12. Verfahren nach einem der vorhergehenden Ansprüche,
dadurch **gekennzeichnet,**
daß es so durchgeführt wird, daß das erzeugte ledeburitische Gefüge leicht unter- bzw. übereutektisch ist.

13. Verfahren nach einem der vorhergehenden Ansprüche,
dadurch **gekennzeichnet,**
daß das Verfahren zügig durchgeführt wird, so daß der Übergang von der ledeburitischen Randschicht zwangsläufig eine eindeutige Gefügegrenze aufweist, ohne daß im Substratbereich eine bedeutende Kohlenstoff-Diffusionszone entsteht.

14. Verfahren nach einem der vorhergehenden Ansprüche,
dadurch **gekennzeichnet,**
daß es auf plane bzw. sphärische Flächen oder auf zylindrische Zapfen, oder auf Nockenflächen bzw. von rundgekneteten Nockenwellen, oder auf Bauteile, die aus Blech, Stangen bzw. Bandeisen durch Schmieden, Kaltfließpressen oder Walzen hergestellt sind, angewendet wird.

15. Bauteil aus einem un- bzw. niedriglegierten Stahl mit mindestens einer verschleißbeständigen Randschicht, insbesondere nach einem der vorhergehenden Verfahrensansprüchen hergestellt, dadurch gekennzeichnet, daß die Randschicht eine ledeburitische Randschicht von etwa 0,7 mm Dicke ist.

16. Bauteil nach dem Anspruch 15,
dadurch **gekennzeichnet,**
daß der Stahl maximal 0,45 % Kohlenstoffgehalt aufweist.

17. Bauteil nach dem Anspruch 15 oder 16,
dadurch **gekennzeichnet,**
daß das ledeburitische Gefüge der Randschicht leicht unter- bzw. übereutektisch ist.

18. Bauteil nach einem der vorhergehenden Ansprüche 15 bis 17,
dadurch **gekennzeichnet,**
daß der Übergang von der ledeburitischen Randschicht zum Stahlsubstratwerkstoff eine eindeutige Gefügegrenze aufweist, ohne daß im Substratbereich eine bedeutende Kohlenstoff-Diffusionsgrenze vorliegt.

19. Bauteil nach einem der vorhergehenden Ansprüche 15 bis 18,
dadurch **gekennzeichnet,**
daß es in Form eines Gelenkkopfes, eines Zapfens, eines Schlepphebels, eines Tassenstößels, einer Nocke, einer Nockenwelle, insbesondere einer rundgekneteten Nockenwelle, realisiert ist und/oder aus Rohr, Blech, Stangen oder Bandeisen bestehend und/oder durch Schmieden, Strangpressen, Kaltfließpressen oder Walzen entstanden ist.

## Claims

1. Method of producing a wear-resistant surface layer on an unalloyed or low alloy steel by the introduction of additional carbon into the surface layer under the action of heat, wherein a carbon-containing material is applied onto the surface of the steel, at least in the region of the desired surface layer, and is dissolved in the surface layer by remelting of the surface layer to form a ledeburite surface layer structure in the surface layer and wherein a ledeburitic surface layer is formed with a thickness of about 0.7 mm.

2. Method in accordance with claim 1, characterized in that the unalloyed or low alloy steel contains a maximum of 0.45 % by weight of carbon.

3. Method in accordance with claim 1 or claim 2, characterized in that the steel is an St52 steel.

4. Method in accordance with one of the preceding claims, characterized in that the carbon is applied onto the surface of the steel in powder-from, preferably in graphite form, and is preferably only applied in a quantity such as to produce the ledeburitic structure by full dissolution in the surface layer without leaving notable residues on the surface.

5. Method in accordance with claim 4, characterized in that the carbon is sprayed onto the surface of the steel.

6. Method in accordance with one of the preceding claims, characterized in that additionally a carbon-containing, gaseous, carbonising agent, preferably CH₄, C₂H₂ or CO/CO₂ is used as a protective gas during the remelting.

7. Method in accordance with one of the preceding claims, characterized in that the remelting is carried out by means of a laser beam, an electron beam or an arc lamp or by TIG remelting.

8. Method in accordance with one of the preceding claims, characterized in that an inductive heating device is used for the preheating or post-heating of the component, or to assist the remelting process.

9. Method in accordance with one of the preceding claims, characterized in that the dwell time of the heat source at the surface to be treated is dependent on the grain fineness of the carbon powder, on the degree of heating beyond the melding temperature and also on the degree of turbulence of the melt.

10. Method in accordance with one of the preceding claims, characterized in that for the production of a ledeburitic surface layer thickness of about 0.7 mm on an St52 steel substrate with a thickness in the region of approximately 5 mm, the dwell time lies in the range of at least 0.1 to 10 s and preferably amounts to about 3 s.

11. Method in accordance with one of the preceding claims, characterized in that it is carried out in such a way that the ledeburitic surface layer structure arises by quenching during the solidification, with the quenching either being achieved by self-quenching of the article and/or by external forced cooling.

12. Method in accordance with one of the preceding claims, characterized in that it is carried out in such a way that the ledeburitic structure which is produced is slightly undereutectic or overeutectic.

13. Method in accordance with one of the preceding claims, characterized in that the method is carried out rapidly so that the transition from the ledeburitic surface layer necessarily has a clear structural boundary without a significant carbon diffusion zone arising in the substrate region.

14. Method in accordance with one of the preceding claims, characterized in that it is used on planar or spherical surfaces or on cylindrical spigots or on cam surfaces respectively of round kneaded cam shafts or on components which are made from sheet metal, rods or strip iron by forging, cold-flow pressing or rolling.

15. Component consisting of an unalloyed or low alloy steel with at least one wear-dependent boundary layer, in particular manufactured in accordance with one of the preceding method claims, characterized in that the boundary layer is a ledeburitic surface boundary layer of approximately 0.7 mm thickness.

16. Component in accordance with claim 15, characterized in that the steel has a maximum of 0.45 % carbon content.

17. Component in accordance with claim 15 or 16, characterized in that the ledeburitic structure of the surface layer is slightly undereutectic or overeutectic.

18. Component in accordance with one of the preceding claims 15 to 17, characterized in that the transition from the ledeburitic boundary layer to the steel substrate material has a clear structural boundary without a significant carbon diffusion zone being present in the substrate region.

19. Component in accordance with one of the preceding claims 15 to 18, characterized in that it is realised in the form of an articulated joint head, of a spigot, of a rocker lever, of a bucket follower, of a cam, of a cam shaft, in particular of a round kneaded camshaft, and/or consists of tube, sheet metal, rod or strip iron and/or has arisen by forging, extrusion, cold flow pressing or rolling.

## Revendications

1. Procédé pour la production d'une couche superficielle résistant à l'usure sur un acier non allié, ou bien faiblement allié, par introduction de carbone additionnel dans la couche superficielle sous l'action de chaleur, dans lequel on applique un matériau contenant du carbone sur la surface de l'acier, au moins dans la région de la couche superficielle désirée, et l'on fait dissoudre le carbone dans la couche superficielle, par refusion de la couche superficielle afin de former une structure de couche superficielle lédeburitique, et l'on réalise une couche superficielle lédeburitique avec une épaisseur d'environ 0,7 mm.

2. Procédé selon la revendication 1, caractérisé en ce que l'acier non allié, ou faiblement allié, contient au maximum 0,45% en poids de carbone.

3. Procédé selon l'une ou l'autre des revendications 1 et 2, caractérisé en ce que l'acier est un acier St 52.

4. Procédé selon l'une des revendications précédentes, caractérisé en ce que le carbone est appliqué sur la surface de l'acier sous forme de poudre, par exemple sous forme de graphite, et de préférence-uniquement dans une quantité propre à produire la structure lédeburitique dans la couche superficielle par dissolution totale, sans laisser de restes notables sur la surface.

5. Procédé selon la revendication 4, caractérisé en ce que le carbone est pulvérisé sur la surface de l'acier.

6. Procédé selon l'une des revendications précédentes, caractérisé en ce que l'on utilise en addition un agent d'apport de carbone sous forme gazeuse, de préférence CH₄, C₂H₂, ou bien CO/CO₂ à titre de gaz protecteur pendant la refusion.

7. Procédé selon l'une des revendications précédentes, caractérisé en ce que la refusion est exécutée au moyen d'un faisceau laser, d'un faisceau d'électrons, ou à l'aide d'une lampe à arc, ou bien par refusion WIG.

8. Procédé selon l'une des revendications précédentes, caractérisé en ce que pour le préchauffage, ou le chauffage ultérieur du composant, ou bien pour assister le processus de refusion, on utilise un dispositif de chauffage inductif.

9. Procédé selon l'une des revendications précédentes, caractérisé en ce que le temps de séjour de la source de chaleur sur la surface à traiter dépend de la finesse de grains de la poudre le carbone, du degré de surchauffe au-delà de la température de refusion, ainsi que du degré de tourbillonnement de la fonte.

10. Procédé selon l'une des revendications précédentes, caractérisé en ce que pour la production d'une couche superficielle lédeburitique d'environ 0,7 mm d'épaisseur sur un substrat en acier St 52 avec une épaisseur de l'ordre d'environ 5 mm, le temps de séjour est situé dans la plage d'au moins 0,1 à 10 s, et s'élève de préférence à environ 3 s.

11. Procédé selon l'une des revendications précédentes, caractérisé en ce qu'il est mis en oeuvre de telle manière que la structure de la couche superficielle lédeburitique se produit par trempe pendant la solidification, ladite trempe étant obtenue par auto-trempe de l'objet et/ou par refroidissement externe forcé.

12. Procédé selon l'une des revendications précédentes, caractérisé en ce qu'il est mis en oeuvre de telle manière que la structure lédeburitique produite est légèrement sous-eutectique, ou bien sur-eutectique.

13. Procédé selon l'une des revendications précédentes, caractérisé en ce qu'il est mis en oeuvre rapidement, de sorte que la transition de la couche superficielle lédeburitique présente obligatoirement une frontière de structure claire, sans apparition dans la zone du substrat d'une zone de diffusion de carbone significative.

14. Procédé selon l'une des revendications précédentes, caractérisé en ce qu'il est appliqué à des surfaces planes ou sphériques, ou sur des tenons cylindriques, ou sur des surfaces de came, comme des arbres à cames corroyés en rond, ou sur des composants produits à partir de tôle, de barres, ou de rubans, par forgeage, étirage à froid, ou laminage.

15. Pièce en acier non allié, ou faiblement allié, présentant au moins une couche superficielle résistant à l'usure, réalisée en particulier selon l'une des revendications de procédé précédentes, caractérisée en ce que la couche superficielle est une couche superficielle lédeburitique d'environ 0,7 mm d'épaisseur.

16. Pièce selon la revendication 15, caractérisée en ce que l'acier présente une teneur en carbone maximum de 0,45%.

17. Pièce selon l'une ou l'autre des revendications 15 et 16, caractérisée en ce que la structure lédeburitique de la couche superficielle est légèrement sous-eutectique, ou bien sur-eutectique.

18. Pièce selon l'une des revendications 15 à 17, caractérisée en ce que la transition depuis la couche superficielle lédeburitique au matériau de substrat en acier présente une frontière de structure claire, sans existence de frontière de diffusion de carbone significative dans la zone du substrat.

19. Pièce selon l'une des revendications 15 à 18, caractérisée en ce qu'elle est réalisée sous la forme d'une tête de joint, d'un tenon, d'une bielle traînée, d'un poussoir en coupelle, d'une came, d'un arbre à cames, en particulier d'un arbre à cames corroyé en rond, et/ou en ce qu'elle a été réalisée à partir de tubes, de tôles, de barre ou de rubans, et/ou qu'elle a été réalisée par forgeage, par étirage à froid, par extrusion ou par laminage.
